# EUROPÄISCHE PATENTSCHRIFT

(11) **EP 2 292 100 B1**
(45) Veröffentlichungstag und Bekanntmachung des Hinweises auf die Patenterteilung: **13.11.2013**
(21) Anmeldenummer: 10172712.1
(22) Anmeldetag: 12.08.2010
(51) Int. Cl.: A23B 4/28

(54) **Injektionsvorrichtung**
Injection device
Dispositif d'injection

(30) Priorität: 04.09.2009 DE 202009011939 U
(43) Veröffentlichungstag der Anmeldung: 09.03.2011
(73) Patentinhaber: Schröder Maschinenbau KG, 33824 Werther (DE)
(72) Erfinder: Umbach, Christoph, 33824 Werther (DE)
(74) Vertreter: Ter Meer Steinmeister & Partner

(56) Entgegenhaltungen:
- EP-A1- 0 246 707
- EP-A1- 1 683 422
- EP-A2- 1 230 859

## Beschreibung

Die Erfindung betrifft eine Injektionsvorrichtung zur Injektion von Flüssigkeit in Lebensmittelprodukte, mit einem mit hohlen Nadeln bestücken Nadelträger, der relativ zu den Lebensmittelprodukten bewegbar ist, so dass die Nadeln in die Lebensmittelprodukte einstechen und dann wieder herausgezogen werden, wobei die Nadeln während des Einstechvorgangs relativ zu dem Nadelträger beweglich sind und mit einer Halteeinrichtung am Nadelträger fixierbar sind.

Aus EP 1 230 859 B1 ist eine Injektionsvorrichtung dieser Art bekannt, die beispielsweise zur Injektion von Pökellake in Fleisch dient. Bei dieser Vorrichtung durchsetzen die Nadeln einen Niederhalter, der zu Beginn eines Injektionsvorgangs gemeinsam mit dem Nadelträger auf die Lebensmittelprodukte absenkbar ist. Wenn der Niederhalter auf den Lebensmittelprodukten aufsetzt, bewegt sich der Nadelträger allein weiter nach unten, so dass die Nadeln in das Produkt einstechen. Gleichzeitig wird ein Lakeventil geöffnet, so dass die Pökellake unter Druck zu den Nadeln zugeführt und in das Fleisch injiziert wird. Die Nadeln sind in ihrer axialen Richtung relativ zu dem Nadelträger beweglich und sind durch den hydraulischen Druck der Pökellake in ihre untere Endlage vorgespannt in der sie am weitesten aus dem Nadelträger herausragen. Wenn beim Absenken des Niederhalters eine Nadel auf ein Hindernis, etwa auf einen Knochen trifft, so kann diese Nadel gegen den hydraulischen Druck in den Nadelträger zurückgedrückt werden. Beim anschließenden Aufwärtshub des Nadelträgers wird diese Nadel dann hydraulisch wieder in ihre untere Endlage zurückgestellt. Die Halteeinrichtung wird durch ein leiterförmiges Gatter gebildet, dessen Sprossen seitlich auf die Nadeln drücken und diese dadurch klemmend am Nadelträger fixieren. Vor Beginn eines Einstechvorgangs wird die Halteeinrichtung aktiviert, damit die Nadeln während des Einstechvorgangs nicht vorzeitig in den Nadelträger zurückgedrückt werden.

Aus der Praxis ist auch eine Injektionsvorrichtung bekannt, bei der die Relativbewegung zwischen Nadeln und Nadelträger dazu dient, die Lakezufuhr zu den einzelnen Nadeln zu steuern. Dadurch wird erreicht, dass die Lakezufuhr zu einer Nadel erst dann beginnt, wenn diese Nadel tatsächlich in das Fleisch einsticht. Diese Betriebsart wird als Kontaktnadelbetrieb bezeichnet. Die Halteeinrichtung dient in diesem Fall zum Umschalten zwischen Kontaktnadelbetrieb und Dauerinjektion. Bei Dauerinjektion hält die Halteeinrichtung die Nadeln in einer Position, in der die Lakezufuhr aktiv ist.

Aus EP 1 683 422 ist auch eine Injektionsvorrichtung zur Injektion von Pökellake in Fleisch bekannt.

Aufgabe der Erfindung ist es, eine Injektionsvorrichtung mit einer zuverlässig arbeitenden und einfach steuerbaren Halteeinrichtung zu schaffen.

Diese Aufgabe wird erfindungsgemäß dadurch gelöst, dass die Halteeinrichtung durch eine mit einem Fluid beaufschlagte Druckkammer und eine in der Druckkammer angeordnete flexible Quetschmuffe gebildet wird, die von der Nadel durchsetzt wird und durch den Druck in der Druckkammer radial gegen die Umfangsfläche der Nadel komprimierbar ist.

Durch die komprimierte Quetschmuffe wird somit die Nadel klemmend in ihrer Position am Nadelträger fixiert. Die Halteeinrichtung für eine einzelne Nadel oder ein Ensemble aus mehreren Nadeln oder auch für sämtliche Nadeln lässt sich dann einfach dadurch aktivieren, dass die Druckkammer mit Druck beaufschlagt wird.

Bei der oben erwähnten herkömmlichen Injektionsvorrichtung konnte im Kontaktnadelbetrieb nur während des Abwärtshubes des Nadelträgers injiziert werden. Beim Aufwärtshub führte die Reibung zwischen der Nadel und dem Fleisch dazu, dass die Nadel wieder aus dem Nadelträger herausgezogen wurde und dadurch in eine Position gelangte, in der die Lakezufuhr unterbrochen war. Bei der erfindungsgemäßen Vorrichtung kann nun die Halteeinrichtung dazu benutzt werden, die Nadeln am Nadelträger zu fixieren, wenn sich der Nadelträger in der Nähe des unteren Totpunktes befindet. Dadurch werden die Nadeln auch während des Aufwärtshubes in der Position gehalten, in der die Lakezufuhr aktiv ist. So lässt sich ein Kontaktnadelbetrieb erreichen, bei dem nicht nur während des Abwärtshubes, sondern auch während des Aufwärtshubes injiziert wird.

Vorteilhafte Ausgestaltungen und Weiterbildungen der Erfindung ergeben sich aus den Unteransprüchen.

Im folgenden wird ein Ausführungsbeispiel anhand der Zeichnung näher erläutert.

### Es zeigen:

- Fig. 1: einen Schnitt durch wesentliche Teile einer erfindungsgemäßen In- j ektionsvorrichtung;
- Fig. 2: ein Detail der Injektionsvorrichtung nach Fig. 1;
- Fig. 3: die Injektionsvorrichtung nach Fig. 1 in einer anderen Betriebspha- se; und
- Fig. 4: die Injektionsvorrichtung im Zustand am Ende eines Injektionszy- klus.

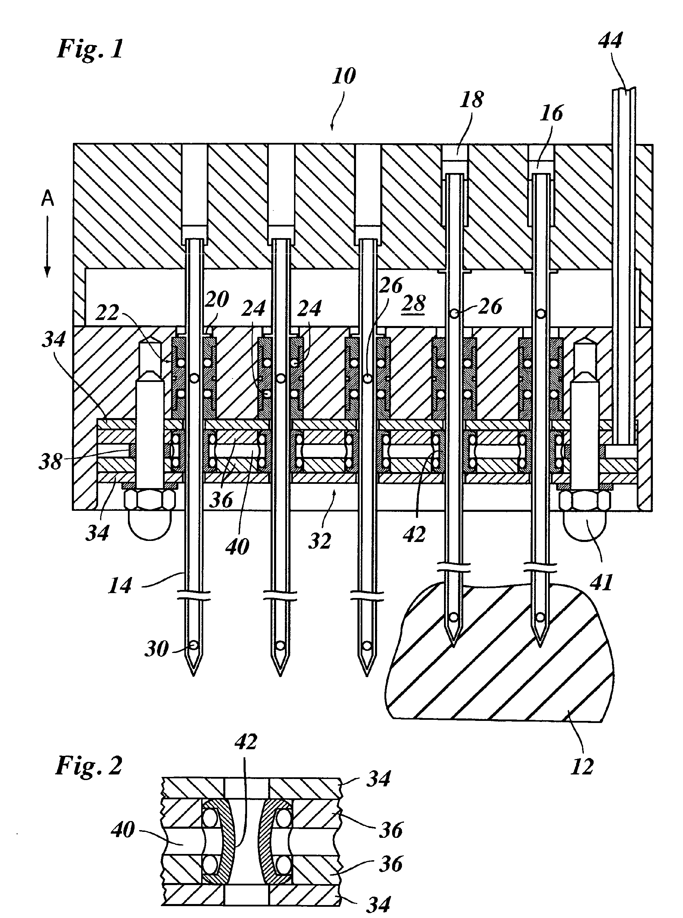

Die in Fig. 1 gezeigte Injektionsvorrichtung weist einen Nadelträger 10 auf, der oberhalb eines nicht gezeigten Förderers für Lebensmittelprodukte 12 angeordnet ist und mit Hilfe eines nicht gezeigten Antriebs oszillierend auf und ab bewegt wird, während die Lebensmittelprodukte 12 auf dem Förderer taktweise vorgerückt werden. Der Nadelträger 10 ist mit nach unten vorspringenden hohlen Nadeln 14 bestückt, die beim Abwärtshub des Nadelträgers in die Lebensmittelprodukte 12 einstechen.

Die Nadeln 14 sind ihrerseits vertikalbeweglich im Nadelträger 10 geführt und weisen jeweils am oberen Ende einen Kolben 16 auf, der in einem in dem Nadelträger ausgebildeten Zylinder 18 läuft, so dass jede einzelne Nadel 14 hydraulisch oder pneumatisch in eine untere Endlage vorgespannt werden kann, in der sie am weitesten aus dem Nadelträger 10 herausragt, wie in Fig. 1 für die drei linken Nadeln gezeigt ist. Ein am Umfang der Nadel gebildeter Anschlag 20 stützt sich dann auf einer Dichtungspackung 22 ab, die zwei Dichtringe 24 aufweist, die am Umfang der Nadel 14 abdichten. Wenn sich die Nadel 14 in ihrer unteren Endlage befindet, so liegt eine in der Umfangswand der Nadel gebildete Einlassöffnung 26 in der Höhe zwischen den beiden Dichtringen 24, so dass sie strömungsmäßig von einer in dem Nadelträger gebildeten Zufuhrkammer 28 getrennt ist. Wenn sich die Nadel dagegen in einer angehobenen Position befindet, wie für die beiden rechten Nadeln in Fig. 1 gezeigt ist, so liegt die Einlassöffnung 26 innerhalb der Zufuhrkammer 28, so dass Flüssigkeit, beispielsweise Pökellake, aus der Zufuhrkammer 28 in die hohle Nadel eingeleitet werden kann.

Am unteren Ende weist jede Nadel 14 mindestens eine Auslassöffnung 30 auf, durch welche die Lake, die mit einer nicht gezeigten Pumpe unter gewissem Druck in die Zufuhrkammer 28 zugeführt wird, in die Lebensmittelprodukte 12 injiziert werden kann.

Wenn sich der Nadelträger 10 während eines Abwärtshubes in Richtung des Pfeilers A nach unten bewegt, so stechen die Nadeln 14, unter denen sich Lebensmittelprodukte 12 befinden, in diese Lebensmittelprodukte ein, wie für die beiden rechten Nadeln in Fig. 1 gezeigt ist. Der Eindringwiderstand, den die Nadeln dabei zu überwinden haben, führt dazu, dass sie sich relativ zu dem Nadelträger 10 nach oben in ihre obere Endlage bewegen, in der die Einlassöffnung 26 innerhalb der Zufuhrkammer 28 liegt. Dadurch wird der Beginn der Injektion von Lake in die Lebensmittelprodukte ausgelöst. Die Nadeln, die nicht in die Lebensmittelprodukte einstechen, wie beispielsweise die drei linken Nadeln in Fig. 1, bleiben hingegen von der Lakezufuhr getrennt, so dass keine Lake unnötig verspritzt wird.

Die Injektion der Lake in die Lebensmittelprodukte 12 hält an, während sich der Nadelträger 10 relativ zu dem Förderer zu seinem unterem Totpunkt bewegt. Wenn der Nadelträger 10 danach mit seinem Aufwärtshub beginnt, so würde ohne weitere Gegenmaßnahmen die Reibung zwischen den Nadeln 14 und den Lebensmittelprodukten 12 dazu führen, dass die Nadeln, die in die Lebensmittelprodukte einstechen, sich relativ zum Nadelträger 10 wieder nach unten bewegen und dadurch von der Lakezufuhr getrennt würden, d.h., die Lake könnte nur während des Abwärtshubes aber nicht während des Aufwärtshubes injiziert werden.

Um eine Injektion auch während des Aufwärtshubes zu ermöglichen, ist bei der hier gezeigten Vorrichtung zusätzlich eine Halteeinrichtung 32 vorgesehen, mit der sich die Nadeln 14 in ihrer axialen Position am Nadelträger 10 fixieren lassen. Die Halteeinrichtung 32 ist in einer von den Nadeln 14 durchsetzten Ausnehmung an der Unterseite des Nadelträgers 14 angeordnet und wird durch obere und untere Platten 34 begrenzt. Zwischen den Platten 34 sind zwei Halteplatten 36 angeordnet, die durch Abstandshalter 38 auf Abstand gehalten werden, so dass zwischen ihnen eine fluiddicht geschlossene Druckkammer 40 gebildet wird. Die Dichtheit wird dadurch gewährleistet, dass das Paket aus den Platten 34, den Halteplatten 36 und den Abstandshaltern 38 mit Schrauben 41 gegen den Nadelträger gespannt wird.

Auf jeder der Nadeln 14 ist eine elastische Quetschmuffe 42 angeordnet, die mit ihren ausgesteiften oberen und unteren Rändern so in den Halteplatten 36 gehalten ist, dass sie die Druckkammer 40 gegenüber der von der Nadel 14 durchsetzten Bohrung abdichtet. Wenn die Druckkammer 40 drucklos ist, so lassen sich die Nadeln 14 lose in den Quetschmuffen 42 verschieben. Wenn dagegen über eine Druckzuführung 44 ein Druckfluid, beispielsweise Druckluft, in die Druckkammer 40 eingeleitet wird, so haben die Quetschmuffen 42 die Tendenz, sich in der in Fig. 2 gezeigten Weise zu verformen, so dass sie sich eng um den Umfang der Nadeln 14 schließen und diese klemmend in Position halten.

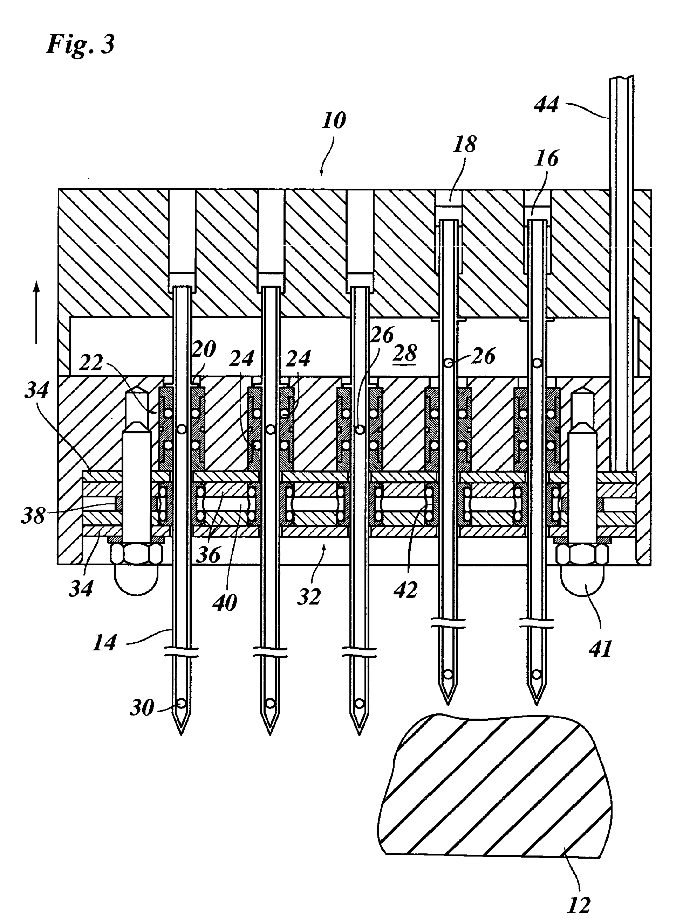

Auf diese Weise wird sichergestellt, dass die Nadeln 14, die in die Lebensmittelprodukte 12 einstechen, auch während des Aufwärtshubes des Nadelträgers ihre Position relativ zu dem Nadelträger behalten, so dass ihre Einlassöffnungen 26 mit der Zufuhrkammer 28 in Verbindung bleiben, wie in Fig. 3 gezeigt ist. Dadurch wird erreicht, dass die Lakeinjektion auch während des Aufwärtshubes des Nadelträgers fortgesetzt werden kann, und zwar gezielt nur mit den Nadeln, die auch während des Abwärtshubes schon an die Lakezufuhr angeschlossen waren, während die übrigen Nadeln (die drei linken Nadeln in Fig. 3) weiterhin inaktiv bleiben.

Wenn die Nadeln 14 wieder ganz aus den Lebensmittelprodukten 12 herausgezogen sind, spätestens am oberen Totpunkt des Nadelträgers 10, wird die Zufuhr von Druckfluid in die Druckkammer 40 beendet, so dass sich der Druck in der Druckkammer entspannt und die Quetschmuffen 42 die Nadeln wieder loslassen.

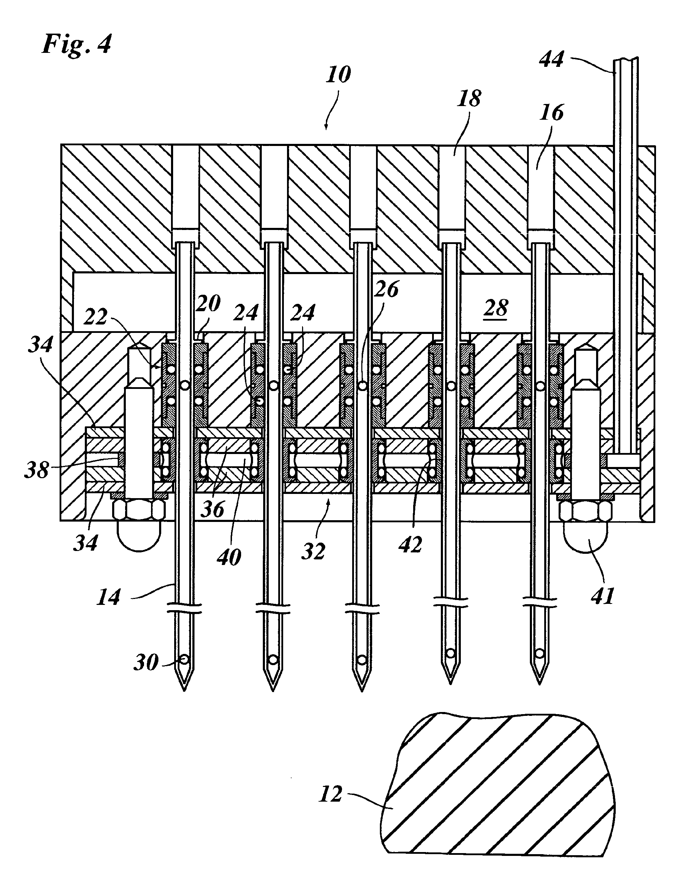

Der hydraulische oder pneumatische Druck in den Zylindern 18 sorgt dann dafür, dass sämtliche Nadeln in ihre untere Endlage bewegt werden, wie in Fig. 4 gezeigt ist. In diesem Zustand kann dann ein neuer Zyklus beginnen.

Während im gezeigten Beispiel die Quetschmuffen 42 für sämtliche Nadeln 14 in einer gemeinsamen Druckkammer 40 liegen, so dass sämtliche Nadeln 14 synchron fixiert oder gelöst werden, ist es in einer anderen Ausführungsform auch möglich, getrennte Halteeinrichtungen analog zu der Halteeinrichtung 32 für verschiedene Gruppen von Nadeln oder für jede einzelne Nadel vorzusehen, so dass die Fixierung individuell gesteuert werden kann.

Ebenso ist es möglich, für jede einzelne Nadel oder für bestimmte Gruppen von Nadeln den Zeitpunkt zu bestimmen, wann diese Nadeln während des Aufwärtshubes wieder aus den Lebensmittelprodukten 12 austreten. Da zu dann der Strömungswiderstand der aus den Nadeln austretenden Flüssigkeit deutlich abnimmt, lässt sich dieser Zeitpunkt beispielsweise mit Hilfe eines in der Zufuhrkammer 28 angeordneten Drucksensors detektieren. Wenn dann zu diesem Zeitpunkt die Fixierung gelöst wird, kann die Lakezufuhr zu den betreffenden Nadeln schon vor Erreichen des oberen Totpunktes unterbrochen werden, so dass keine Lake mehr verspritzt wird, nachdem die Nadeln aus dem Lebensmittelprodukt ausgetreten sind.

## Patentansprüche

1. Injektionsvorrichtung zur Injektion von Flüssigkeit in Lebensmittelprodukte (12), mit einem mit hohlen Nadeln (14) bestückten Nadelträger (10), der relativ zu den Lebensmittelprodukten (10) bewergbar ist, so dass die Nadeln (14) in die Lebensmittelprodukte einstechen und dann wieder herausgezogen werden, wobei die Nadeln (14) während des Einstechvorgangs relativ zu dem Nadelträger (10) beweglich sind und mit einer Halteeinrichtung (32) am Nadelträger (10) fixierbar sind, **dadurch gekennzeichnet, dass** die Halteeinrichtung (32) durch eine mit einem Fluid beaufschlagte Druckkammer (40) und eine in der Druckkammer angeordnete, flexible Quetschmuffe (42) gebildet wird, die von der Nadel (14) durchsetzt wird und durch den Druck in der Druckkammer (40) radial gegen die Umfangsfläche der Nadel komprimierbar ist.

2. Injektionsvorrichtung nach Anspruch 1, bei der die Druckkammer (40) zwischen Halteplatten (36) gebildet ist, in denen die Enden der Quetschmuffen (42) gehalten sind.

3. Injektionsvorrichtung nach Anspruch 1 oder 2, mit einer gemeinsamen Druckkammer (40) für mehrere Nadeln (14).

## Claims

1. Injection device for injecting liquid into food products (10), comprising a needle carrier (10) having hollow needles (14) and being movable relative to the food products (12) such that the needles (14) penetrate into the food products and are then withdrawn again, wherein the needles, during the penetration, are movable relative to the needle carrier (10) and adapted to be immobilized on the needle carrier (10) by a holding device (32), **characterized in that** the holding device (32) is formed by a pressure chamber (14) receiving a fluid, and a flexible quench collar (42) arranged in the pressure chamber and being pierced by the needle (14) and adapted to be compressed radially against the peripheral surface of the needle by the pressure in the pressure chamber (14).

2. Injection device according to claim 1, wherein the pressure chamber (40) is formed between holding plates (36) in which the pins of the quench collar (42) are held.

3. Injection device according to claim 1 or 2, having a common pressure chamber (40) for a plurality of needles (14).

## Revendications

1. Dispositif d'injection pour injecter un liquide dans des produits alimentaires (12), comportant un porte-aiguilles (10) équipé d'aiguilles creuses (14) et mobile par rapport aux produits alimentaires (10) de telle sorte que les aiguilles (14) s'enfoncent dans les produits alimentaires et sont ensuite de nouveau retirées, dans lequel les aiguilles (14) sont mobiles par rapport au porte-aiguilles (10) pendant le processus d'enfoncement et peuvent être fixées sur le porte-aiguilles (10) avec des moyens de retenue (32), **caractérisé en ce que** les moyens de retenue (32) sont formés par une chambre de pression (40) soumise à l'action d'un fluide et un manchon d'écrasement souple (42), agencé dans la chambre de pression, lequel manchon d'écrasement est traversé par l'aiguille (14) et peut être comprimé par la pression dans la chambre de pression (40) radialement contre la surface circonférentielle de l'aiguille.

2. Dispositif d'injection selon la revendication 1, dans lequel la chambre de pression (40) est formée entre des plaques de retenue (36) dans lesquelles les extrémités des manchons d'écrasement (42) sont maintenues.

3. Dispositif d'injection selon la revendication 1 ou 2, comportant une chambre de pression commune (40) pour plusieurs aiguilles (14).
